Europäisches Patentamt

European Patent Office

Office européen des brevets

Publication number: **0 317 078**

**A1**

# EUROPEAN PATENT APPLICATION

Application number: 88309700.8

Date of filing: 17.10.88

Int. Cl.⁴: **B25J 19/06**

Priority: 16.11.87 US 121405

Date of publication of application:
24.05.89 Bulletin 89/21

Designated Contracting States:
**DE FR GB**

Applicant: **GENERAL MOTORS CORPORATION**
**General Motors Building 3044 West Grand**
**Boulevard**
**Detroit Michigan 48202(US)**

Inventor: **Cwycyshyn, Walter**
**8744 South Channel**
**Harsens Islands MI 48028(US)**
Inventor: **Kudwa, Frank J.**
**4742 Tuxedo North**
**Warren MI 48092(US)**

Representative: **Haines, Arthur Donald et al**
**Patent Section (F6) Vauxhall Motors Limited**
**P.O. Box 3 Kimpton Road**
**Luton, Beds. LU2 OSY(GB)**

Clutch for robot mechanism.

The present invention provides a clutch (7) connected between a robot mechanism (9) and an attached end-of-arm-tooling device (EOAT) (11). The clutch (7) includes two plates (10,20) having a fixed relationship with one another maintained by permanent magnet cells (30) housed in one of the plates (20). Excessive loading on the EOAT (11) beyond predetermined amounts causes the plates (10,20) to separate from one another. Any changes in the fixed relationship of the plates (10,20) with respect to one another will cause a substantially instantaneous diminishing of any load being transmitted between the two plates (10,20).

Fig. 2

# CLUTCH FOR ROBOT MECHANISM

## Field of the Invention

This invention relates to a clutch (commonly known as a cut-out device) for connection between a robot mechanism and an attached end-of-arm-tooling device (EOAT) as specified in the preamble of claim 1. for example as disclosed in US-A-4, 540,331.

## Disclosure Statement

To protect a robot mechanism and its associated tooling from excessive loading as a result of mis-programming of the robot mechanism, interference with unintended obstructions, or malfunctions of the tooling, it is common to provide a clutch or cut-out device between the robot mechanism and the attached EOAT. The clutch provides compliance to prevent damage usually by some form of deformation and often contains a sensor to signal that deformation has occurred so that the robot mechanism may stop operations. An example of such a device is shown in US-A-4,540,331.

Most clutches are essentially spring-loaded mechanical or pneumatic devices and are dependent upon some type of deformation of the spring element to provide the compliance in the case of excessive loading. With a spring-loaded clutch device. normal over-travel of a robot mechanism to which it is fitted continues to compress the clutch springs and overload forces continue to increase for a short period of time after the overload condition is sensed and signalled. In other words, although the clutch produces a signal to the robot mechanism to stop, an excessive and often increasing load is still being applied on the EOAT until the robot mechanism actually comes to a halt. It is desirable to provide a clutch that can limit and separate the load exerted on the EOAT from the robot mechanism at the instant the overload condition is sensed.

In cases of severe or continuous overloads, an operator can be tempted to over-ride and increase the clutch-release load by adjusting the springs or increasing the air pressure in a bladder of such a clutch until the break-away feature of the clutch becomes inoperative. It is, therefore, desirable to provide a break-away clutch that cannot be varied except by design or component replacement.

## Summary of the Invention

A clutch in accordance with the present invention is characterised by the features specified in the characterising portion of claim 1.

The present invention provides a clutch having two plates. One plate connects with a robot mechanism and the other plate is connected with an EOAT. Load releasable means are provided to hold the plates together in a fixed relationship with one another. Deformation of the fixed position between the two plates causes the load transmitted between the two plates to be substantially instantaneously diminished. In a preferred embodiment of the present invention the means for holding the plates together is a magnetic force provided by permanent magnets. The present invention is particular useful when using robots for welding in automotive assembly operations.

It is an object of the present invention to provide a clutch apparatus and method of utilization thereof, for connection between a robot mechanism and an attached EOAT.

It is another object of the present invention to provide a clutch adapted for connection between a robot mechanism and an attached EOAT which undergoes deformation upon applying a load on the EOAT beyond a predetermined amount. the clutch including a first plate for connection with the robot mechanism, a second plate for connection with the EOAT, means holding the first and second plates together in a fixed relationship with one another whereby the plates move relative to one another when the EOAT is loaded beyond said predetermined amount and whereby the load transmitted between the first and second plates diminishes substantially instantaneously upon any deformation in the fixed position between the first and second plates.

It is another object of the present invention to provide a clutch adapted for connection between a robot mechanism and an attached EOAT for deformation upon the exertion of an applied load upon the EOAT beyond a predetermined amount. the clutch including a first plate for connection with the robot mechanism, the first plate having a series of cam-tapered nests, a second plate for connection with the EOAT having a fixed relationship with respect to the first plate, and the second plate having sensing means to provide a signal to the robot mechanism upon changes in the fixed position of the second plate with respect to the first plate, the second plate further including a means of connection to allow the second plate to hang from the first plate upon a change in the fixed position of the second plate with respect to the first plate and the second plate having rotative cam members nested within the cam-tapered nests of the first plate whereby rotation of the second plate with respect to the first plate causes the second plate to be urged away from the first plate, and permanent magnets connected with the second plate holding the first and second plates together in said fixed relationship with one another whereby whenever the plates move relative to one another when the EOAT is loaded beyond a predetermined amount the load transmitted between the plates diminishes substantially instantaneously upon any change in the fixed position between the first and second plates.

It is yet still another object of the present invention to provide a method of attaching an EOAT to a robot mechanism utilizing a clutch, the method including connecting with the robot mechanism a first plate, connecting with the EOAT a second plate, and holding the first and second plates together in a fixed relationship with one another whereby the plates move relative to one another when the EOAT is loaded beyond a predetermined amount and the load transmitted between the first and second plates diminishes instantaneously upon any deformation in the fixed position between the first and second plates.

Other objects, and advantages of the invention will become more apparent to those skilled in the art as the nature of the invention is better understood from the accompanying drawings and a detailed description hereinafter.

Brief Description of the Drawings

Figure 1 is a top plan view of a preferred embodiment of a clutch according to the present invention;

Figure 2 is a front elevation, partly cross-sectional view of the clutch illustrated in Figure 1;

Figure 3 is a top plan view, partly in cross-section, of an alternative embodiment of the clutch of the present invention;

Figure 4 is a cross-sectional view taken along line 4-4 of Figure 3;

Figure 5 is a cross-sectional, cut-away view taken along line 5-5 of Figure 3; and

Figures 6 and 7 are cut-away cross-sectional views of alternative embodiments of the present invention from those illustrated in Figures 1 and 3.

Detailed Description of the Drawings

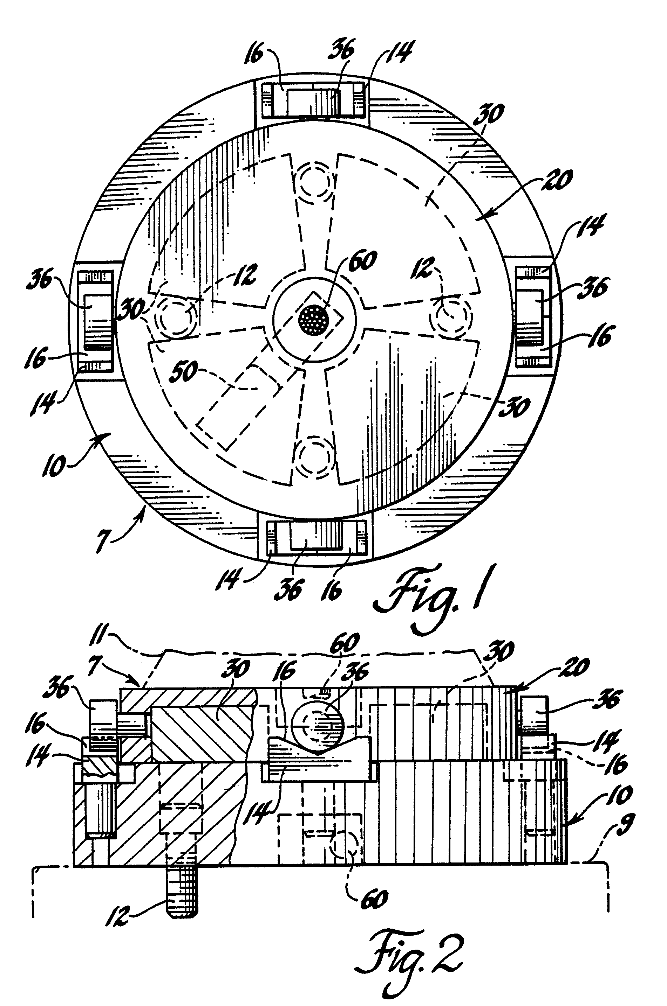

Referring to Figures 1 and 2, a clutch 7 is adapted for connection between a robot mechanism 9 and an attached EOAT 11. The clutch 7 has a first plate 10 for connection with the robot mechanism 9 by a series of bolts 12. Opposite the first plate and having a fixed position with respect thereto is a second plate 20. The second plate 20 is adapted for connection with the EOAT 11.

The second plate 20 has connected thereto four Magnaquench (R.T.M.) permanent magnet cells 30. A more detailed explanation of such magnets as noted above can be gained by a review of US-A-4,496,395. The magnets 30 provide the means to hold the first plate 10 and second plate 20 together in a fixed relationship with one another. The first plate 10 also has a series of insertable cam-tapered nests 14 equally distributed around the periphery thereof. The second plate 20 has rotatively mounted thereto a series of cam-rollers 36, each one of which is nested within a respective one of the previously described cam-tapered nests 14. The clutch 7 also has a sensor means 50 which transmits a signal to the robot mechanism 9 upon any separation of the plates from one another. To prevent the EOAT 11 from falling off or away from the robot mechanism 9, there is provided a retention cable 60 which provides a means to allow the second plate 20 to hang from the first plate 10 even though plates 10, 20 have separated from one another.

In the environment of robotic welders in automotive assembly plants, most of the EOAT weld-guns have contact tips which are off-centre. Therefore excessive loading on the EOAT weld-gun will usually cause a torsional force component to be exerted upon the second plate 20. The torsional force exerted upon the second plate 20 causes the cam rollers to roll up the tapered surfaces 16 of the cam-tapered nests 14 thereby separating the second plate 20 from the first plate 10. The tapered angle of the cam-tapered nest 14 determines the torsional force required for the second plate 20 to move from its fixed position with respect to the first plate 10. Therefore the holding force required can be easily adjusted for the different applications by replacing the cam nest 14 with a taper at a different angle and/or by substitution of a magnet cell 30 with a different magnetic force. The separation of the second plate 20 from the first plate 10 activates the sensor 50 to signal for the cessation of movement of the robot mechanism 9.

Upon the displacement of the second plate 20 relative to the first plate 10, the magnetic force holding the second plate 20 to the first plate 10 instantaneously diminishes. Therefore, upon excessive loading on the EOAT 11, the force transmitted between the first 10 and second 20 plates and, in like manner, the force transmitted between the EOAT 11 or a workpiece (not shown) and robot mechanism 9 instantly diminishes. Also, torque force is prevented from being transmitted from the EOAT to the drive of the robot mechanism 9.

Clutch 7 will also operate in the manner noted above when an excessive tensional force acts upon the EOAT 11. pulling it away from robot 9.

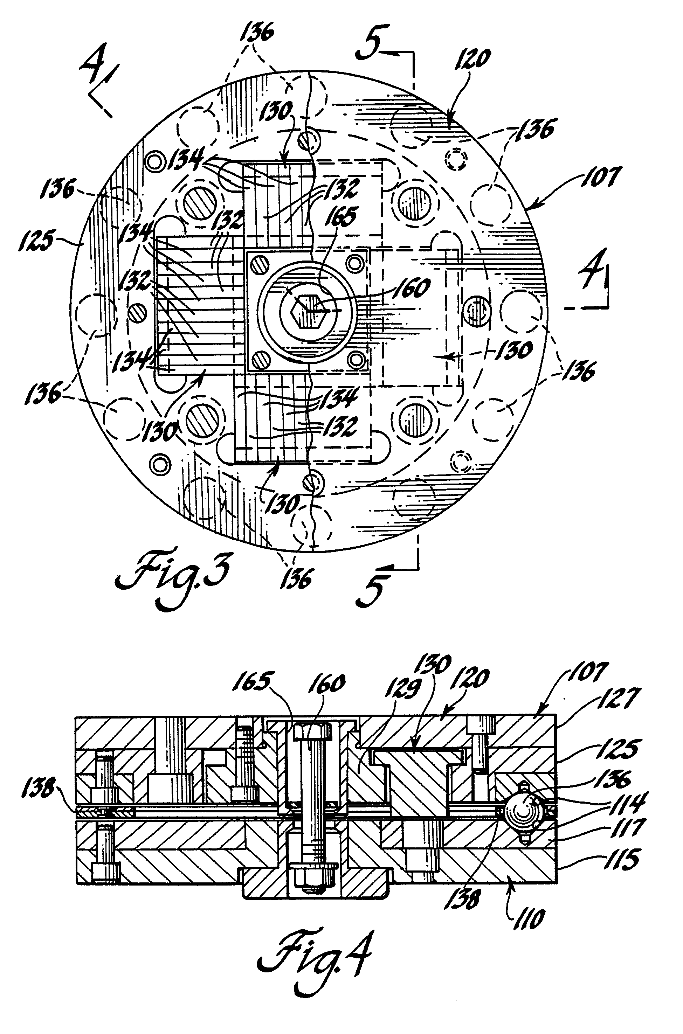

Referring to Figures 3, 4 and 5, an alternative embodiment of the clutch to that previously described is illustrated. Clutch 107 has a combination-type plate construction in that a first plate 110 and a second plate 120 both utilize aluminum in certain portions (115, 125, 127, 129) to minimize weight and a ferro-magnetic material in another portion 117 to provide the magnetic field necessary. The above design also maximizes the density of the magnetic flux by eliminating magnetic flux in other portions of the clutch 107. To allow the second plate 120 to hang from the first plate 110 upon separation there is provided a loose-fitting fastener 160. with a head and an attached nut, which extends through a central aperture 165 which extends through both of the plates 110, 120. A magnet cell 130 that is utilized is laminated with an alternating serrated design of steel 132 and magnet material 134. The steel 132 serves as a flux line guidance material to direct a magnetic flux circuit between the cell 130 and the ferro-magnetic portion 117 thereby providing greater retentional power between the first plate 110 and the second plate 120.

The first plate 110 has a series of cam-tapered nests 114. Placed in the cam-tapered nests 114 is a series of roller-bearings 136 which are captured in a roller-bearing ring 138 which is positioned between the first plate 110 and the second plate 120 and is connected with the plate 120. Torsional loading beyond a predetermined limit will cause the second plate 120 to rotate with respect to the first plate 110 causing the first 110 and second 120 plates to separate with respect to one another. In like manner there is also provided a sensor (not shown) to sense separation of the second plate 120 with respect to the first plate 110 and therefore signal to the associated robot mechanism to cease operations.

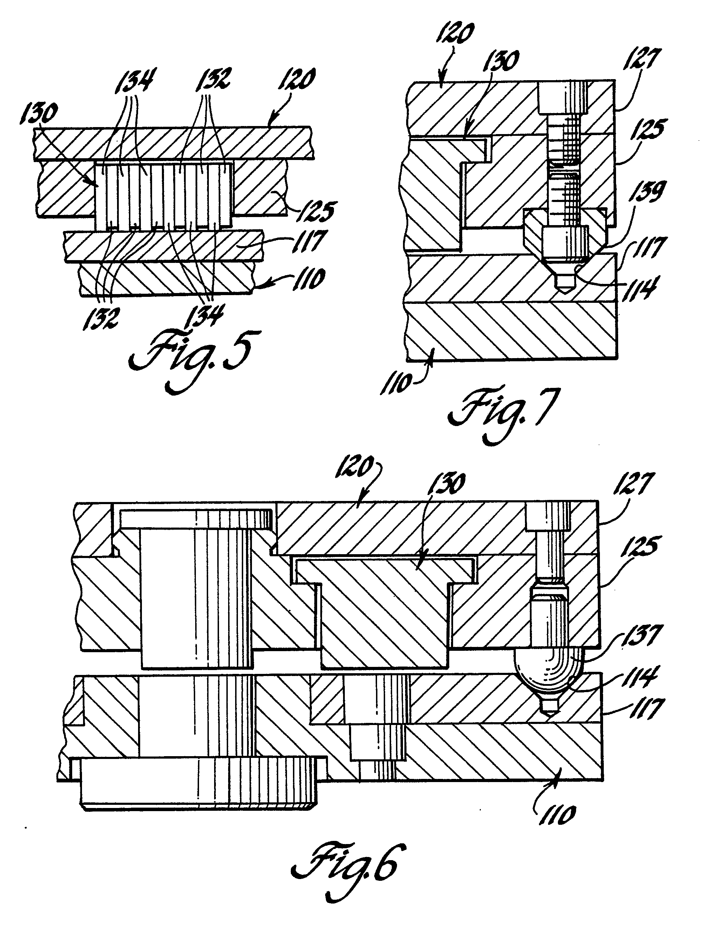

Referring additionally to Figure 6, an alternative embodiment of the invention to the embodiment shown in Figures 3, 4 and 5 is provided. using in place of the roller bearings a series of posts, each having a spherical end surface 137 and being fixedly connected with the second plate 120. Each spherical end surface 137 is nested into a respective cam-tapered nest 114 of the first plate 110. Still another alternative embodiment of the invention is provided in Figure 7 which utilizes a conical ring 139 in place of the spherical end surface 137 shown in Figure 6. Each conical ring 139 is fixedly connected with the second plate 120 and is nested within a respective cam-tapered nest 114 of the first plate 110. The conical ring embodiment of the invention additionally provides a locator mechanism for ensuring proper positioning of the first plate 110 relative to the second plate 120 plate during assembly of the clutch.

The present invention provides a method of attaching an EOAT to a robot mechanism utilizing a clutch, which method includes the following steps:

1. Connecting a first plate 10 with the robot 9;

2. Connecting a second plate 20 with the EOAT 11;

3. Holding the first plate 10 and second plate 20 together in a fixed relationship with one another by an arrangement whereby the plates can move relative to one another when the EOAT 11 is loaded beyond a predetermined amount, and the load transmitted between the first plate 10 and second plate 20 diminishes instantaneously upon any change in the fixed position between the first plate 10 and second plate 20.

## Claims

1. A clutch (7;107) adapted for connection between a robot mechanism (9) and an attached end-of-arm-tooling device (11) which is disengageable upon the application of an applied load on said end-of-arm-tooling device (11) which exceeds a predetermined amount, said clutch (7;107) comprising: a first plate (10;110) for connection with said robot mechanism (9); a second plate (20;120) for connection with said end-of-arm-tooling device (11); and releasable means (30;130) holding said first and second plates (10,20;110,120) together in a fixed relationship with one another whereby said plates (10,20;110,120) can move relative to one another when said end-of-arm-tooling device (11) is loaded beyond said predetermined amount characterised in that the load transmitted between said first and second plates (10,20;110,120) of said clutch (7;107) diminishes substantially instantaneously upon any change in the fixed relationship existing between said first and second plates (10,20;110,120), and said releasable means (30;130) re-engages said clutch (7;107) as soon as said fixed relationship between said first and second plates (10,20;110,120) is restored.

2. A clutch according to Claim 1, characterised in that said releasable means (30;130) for holding said first and second plates (10,20;110, 120) together includes a permanent magnet cell (30;130) connected to at least one of said plates (10,20;110,120).

3. A clutch according to Claim 1 or 2, characterised in that, in said clutch (7;107), one (20;120) of said plates has cam surfaces (36;136; 137;139) nested in cam-tapered nests (14;114) of the other (10;110) of said plates.

4. A clutch according to Claim 3, characterised in that said cam surfaces are rollers (36) rotatably mounted to said plate (20).

5. A clutch according to Claim 3, characterised in that each cam surface includes a conical ring (139) connected with said plate (120) and said other plate (110) has a respective conical surface (114) for nesting said ring (139).

6. A clutch according to Claim 1, characterised in that the clutch (7;107) further includes connecting means (60;160) allowing said second plate (20;120) to hang from said first plate (10;110) upon a displacement of said second plate (20;120) from said fixed position relative to said first plate (10;110).

7. A clutch according to Claim 1, characterised in that the clutch (7) further includes sensing means (50) for sensing any change in the fixed position of the second plate (20) with respect to the first plate (10), said sensing means (50) providing a signal for cessation of movement of said robot mechanism (9).

Fig. 1

Fig. 2

Fig.3

Fig.4

*Fig.5*

*Fig.7*

*Fig.6*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 474 927 (JUNGHEINRICH) <br> * Page 6, line 6 - page 9, line 35; page 11, lines 1-5 * | 1-3,5-7 | B 25 J 19/06 |
| Y | | 4 | |
| X | EP-A-0 092 534 (PALMER) <br> * Page 5, lines 21-26; claim 1 * | 1,2 | |
| Y | | 3,4,6,7 | |
| Y | EP-A-0 090 060 (YASKAWA) <br> * Abstract * | 3,4 | |
| Y | US-A-4 500 065 (HENNEKES) <br> * Column 3, line 49 - column 4, line 4 * | 6,7 | |
| A | US-A-4 514 616 (WARNER) <br> * Column 3, lines 13-21; column 4, lines 20-28 * | 5 | |

TECHNICAL FIELDS SEARCHED (Int. Cl.4)

B 25 J

The present search report has been drawn up for all claims

| Place of search | Date of completion of the search | Examiner |
|---|---|---|
| THE HAGUE | 13-02-1989 | LAMMINEUR P.C.G. |

EPO FORM 1503 03.82 (P0401)